# DEMANDE DE BREVET EUROPEEN

(11) **EP 2 135 764 A1**
(43) Date de publication de la demande: **23.12.2009**
(21) Numéro de dépôt: 09350004.9
(22) Date de dépôt: 03.06.2009
(51) Int. Cl.: B60J 7/20

(54) **Mecanisme de toit pour véhicule convertible à toit rigide**

(30) Priorité: 16.06.2008 FR 0853964
(71) Demandeur: Heuliez, 79140 Cerizay (FR)
(72) Inventeur: Develle, Laurent, 79300 Bressuire (FR)
(74) Mandataire: Tournel, Jean Louis

(57) **Abrégé**

Il s'agit d'un mécanisme de toit pour un véhicule à toit rigide monté mobile sur la caisse du véhicule. Des butées (27a) permettent de limiter le mouvement du toit (5) vers sa position de fermeture par contact entre lesdites butées et des éléments (13a, 17) de déplacement du toit participant à sa mobilité. Les butées (27c) servent également d'appui à une tablette (29) équipant le véhicule, lorsque le toit (5) est en position d'ouverture, escamoté.

## Description

L'invention concerne un mécanisme de toit pour un véhicule à toit monté mobile sur la caisse du véhicule.

Les véhicules à toit rigide, comme dans FR-A-2802478 ou EP-A-1867511, sont visés spécifiquement.

Ainsi, sont déjà connus de tels mécanismes de toit pour des toits rigides articulés sur la caisse du véhicule entre une position de fermeture au-dessus de l'habitacle du véhicule et une position escamotée d'ouverture de cet habitacle, le mécanisme comprenant des butées permettant de limiter le mouvement du toit vers sa position de fermeture par contact entre lesdites butées et des éléments de déplacement du toit participant à sa mobilité.

Ces « éléments de déplacement du toit » sont typiquement montés articulés entre la caisse et le toit, et interviennent pour mettre en mouvement ce toit.

US-A-6 257 649 présente une solution de butée à ressort pour un toit souple (capote).

Un but de l'invention est de pouvoir proposer une solution de mécanisme à butées du type précité qui conviennent aux toits rigides et aux (caisses de) véhicules les recevant.

Un autre but est de limiter les coûts en regroupant des fonctions.

Un autre but est d'assurer un soutien efficace à une tablette arrière équipant le véhicule, au moins en position opérationnelle toit ouvert.

Dans une version préférée, ce toit peut, ouvert, être escamoté sous le capot d'un espace arrière de rangement prévu sur la caisse.

Dans ce contexte, un autre but est de permettre que la tablette arrière précitée puisse recouvrir - de préférence tout - l'intervalle entre l'avant dudit capot et l'arrière de l'habitacle, en position ouverte du toit, tout en étant alors bien soutenue et opérationnelle.

Un autre but est de permettre que la tablette arrière puisse être montée mobile sur le capot précité, tout en étant donc bien soutenue en position proche de l'horizontale, au moins en position opérationnelle toit ouvert.

Pour satisfaire tout ou partie de ces buts, il est proposé que les butées précitées qui permettent de limiter le mouvement du toit vers sa position de fermeture servent également d'appui à une tablette équipant le véhicule, lorsque le toit est en position d'ouverture, escamoté.

Un toit rétractable (donc rigide) équipé d'un tel mécanisme est également ainsi proposé, de même qu'un véhicule équipé de ce mécanisme.

D'autres caractéristiques et avantages de l'invention apparaîtront encore dans la description du mode de réalisation qui suit proposé, en liaison avec les dessins annexés, à titre d'exemple non limitatifs et où :
- la figure 1 schématise une partie d'un véhicule convertible pourvu d'un toit rétractable, basculant, ici fermé,
- les figures 2,3 et 5 (ou 6) montrent trois étapes de mouvement du toit, successivement fermé, en position intermédiaire et ouvert,

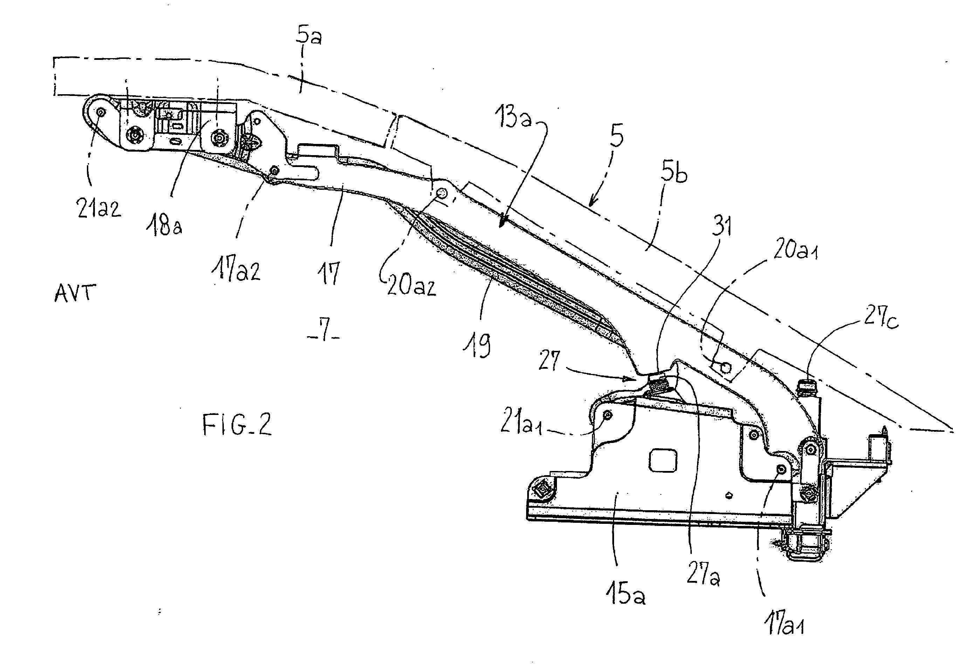

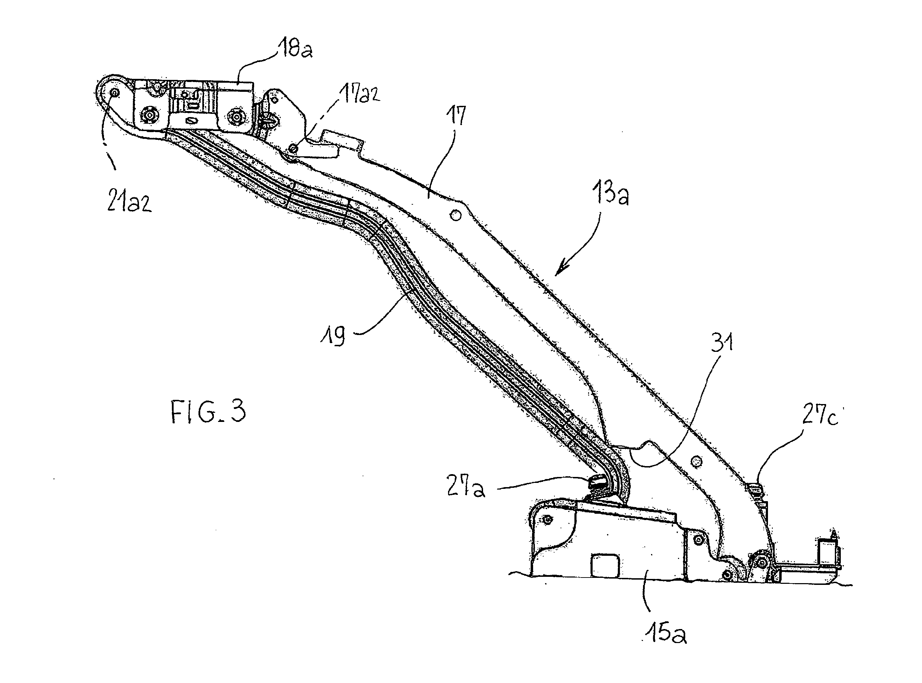

- les figures 2-8 détaillent le mécanisme du toit, et en particulier les éléments de déplacement participant à sa mobilité, ainsi que les butées servant d'appui au toit et à une tablette arrière équipant le véhicule,

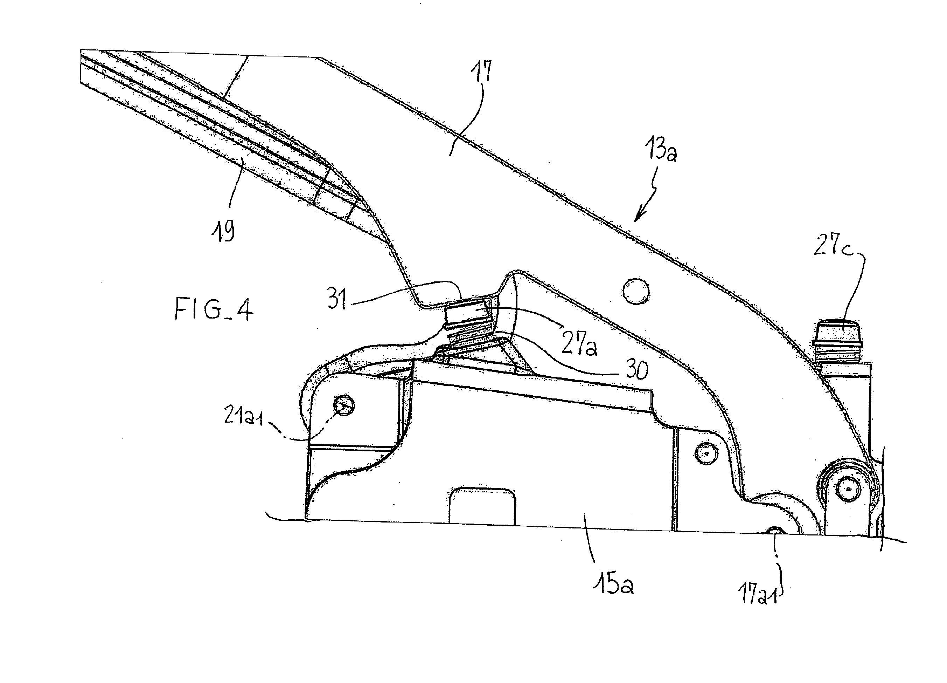

- la figure 4 est une vue agrandie locale de la figure 2,

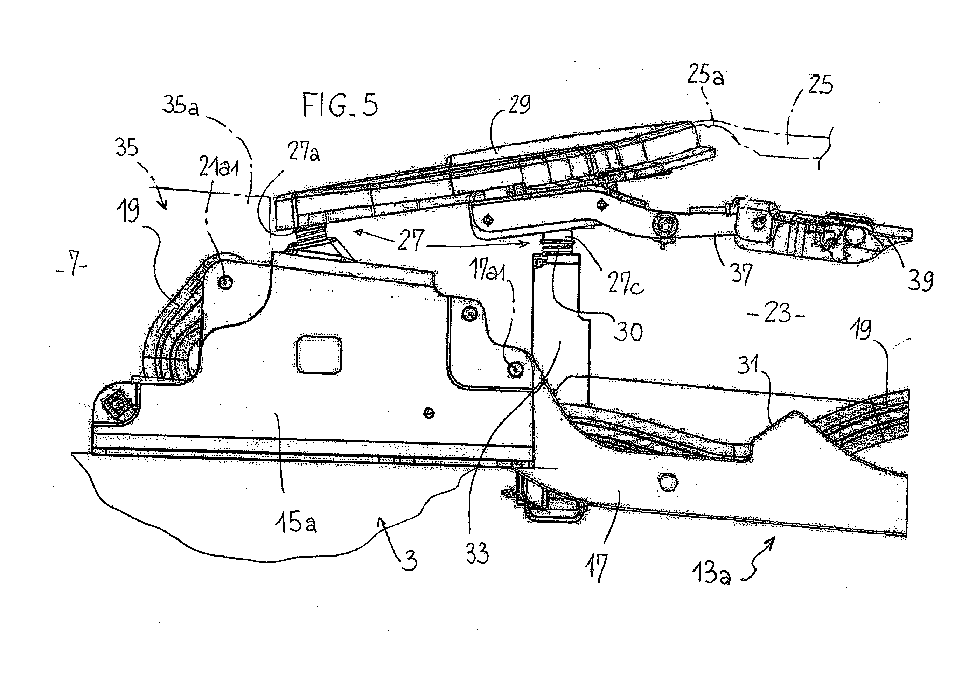

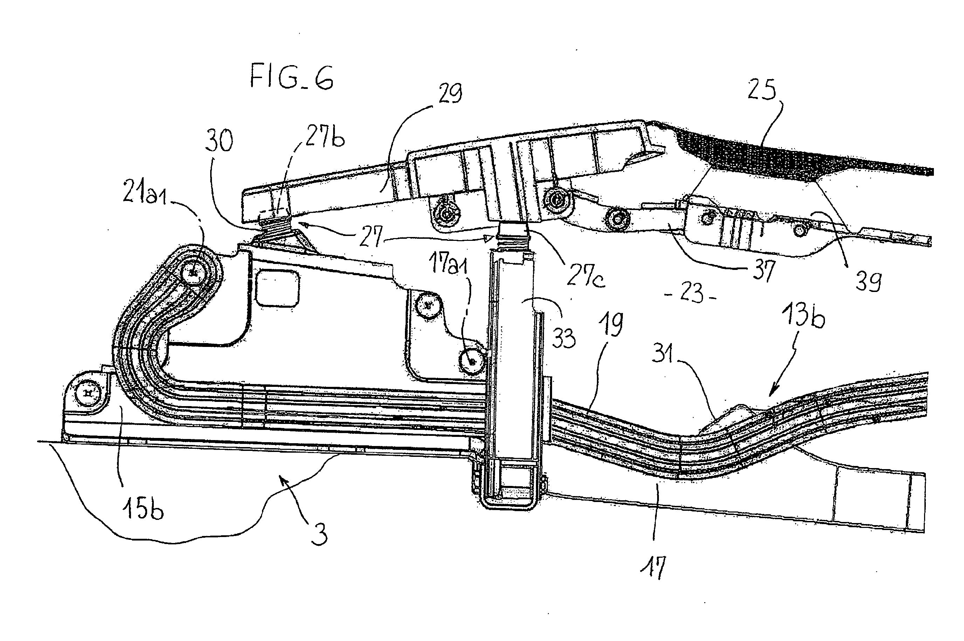

- les figures 5, 6 montrent les zones latérales respectivement gauche et droite, vers la base des éléments de déplacement du toit, dans la zone où ils s'articulent à la caisse, ainsi que l'appui de la tablette, toit ouvert,

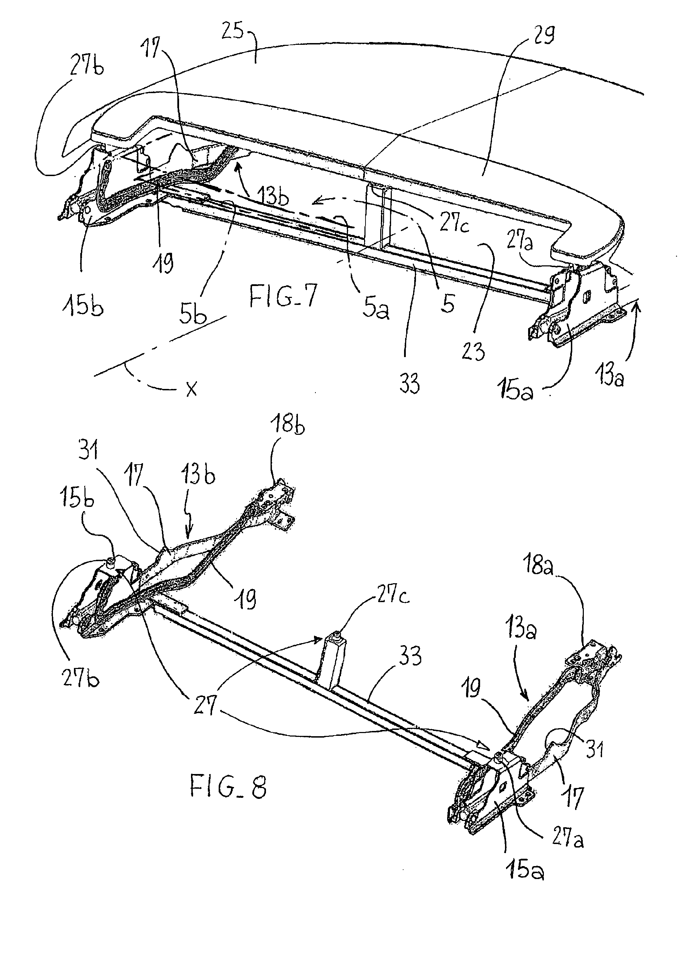

- les figures 7 et 8 montrent en perspective, respectivement la tablette capot de coffre fermé et toit ouvert, et la position des éléments de déplacement du toit, dans cet état toit ouvert (alors sans capot).

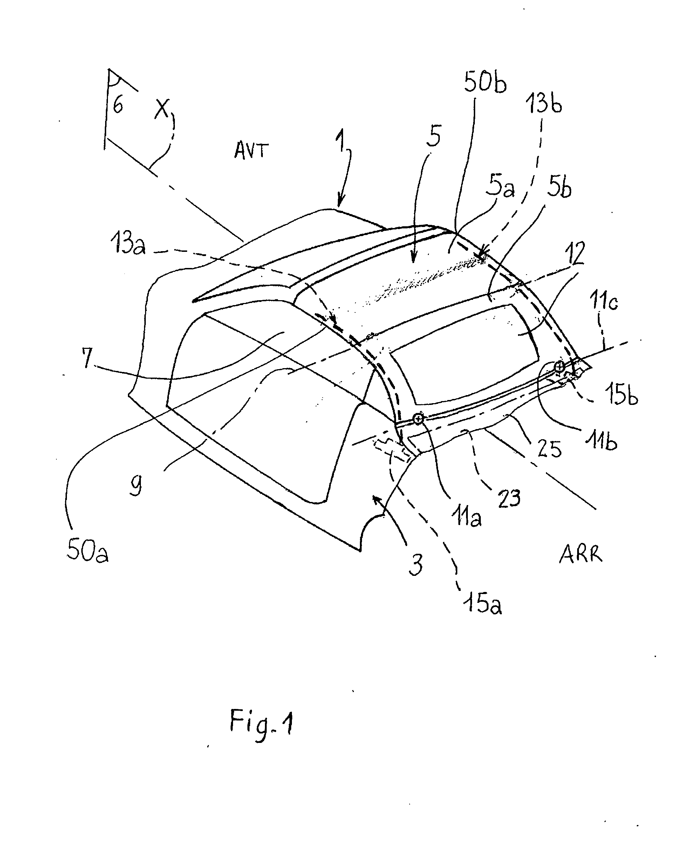

Figure 1, le véhicule convertible 1 comprend une caisse 3 et un toit rétractable 5 monté articulé pour basculer sur elle.

Il présente également un plan vertical de symétrie 6 passant par l'axe longitudinal X.

Le toit 5 comprend plusieurs éléments 5a,5b rigides de toit lui permettant de recouvrir l'habitacle 7 et de le découvrir.

Dans l'exemple, le toit 5 comprend ainsi un élément avant de toit 5a articulé, suivant l'axe transversal 9, par rapport à l'élément arrière de toit 5b, lequel s'articule en 11a, 11b sur la caisse, suivant l'axe transversal 11c et peut comprendre la lunette arrière 12.

De nombreux détails des moyens, repérés globalement 13a,23b, de déplacement du toit 5 (par articulation) schématisés fig.1 sont illustrés figs.2-8.

Ces moyens sont prévus de part et d'autre de l'axe longitudinal X du véhicule, symétriquement, le long des bords latéraux de ce toit.

Figures 2 à 6, seul l'un - 13a ou 13b - est représenté.

Ces moyens sont ici portés chacun par une platine - respectivement 15a,15b - rapportée fixement sur la caisse 3, favorisant un montage ergonomique du toit sur le véhicule.

Ces organes ou moyens 13a, 13b définissent un mécanisme et sont donc adaptés à entraîner le toit 5 entre ses positions fermée/déployée et ouverte/pliée. Dans cette position ouverte, la partie avant de toit 5a est alors disposée au-dessus de la partie arrière de toit 5b, sensiblement à l'horizontale, avec leurs concavités face à face.

Les moyens de déplacement 13a, 13b comprennent de chaque côté du toit un bras 17 latéral rigide, moteur. Celui-ci est monté pivotant sur le châssis - ici la platine 15a ou 15b - et sur l'élément avant de toit 5a - ici via la platine 18a ou 18b supportant fixement l'élément 5a -, selon deux axes respectifs de rotation 17a1, 17a2, transversaux à la direction X.

Chaque bras latéral 17 peut être entrainé en basculement par un moyen moteur, tel un vérin, et porte fixement l'élément arrière de toit 5b, via les liaisons 20a1, 20a2 fig.2.

Les moyens de déplacement 13a,13b comprennent également de chaque côté du toit un bras 19 latéral rigide de guidage, monté pivotant sur le châssis - ici la platine 15a ou 15b - et sur l'élément avant de toit 5a - ici plus à l'avant de la platine 18a ou 18b -, selon deux axes respectifs de rotation transversaux 21a1, 21a2.

Les organes 15a, 17, 18a, 19 et 15b, 17, 18b, 19 forment chacun une structure déformable multi-brins (multi-link structures), ici un parallélogramme basculant d'avant en arrière et inversement.

En position fermée du toit, comme figs.1,2,4, les bras allongés 17,19 de ces structures déformables sont basculés en position inclinée vers l'avant (AVT).

Avec un tel mécanisme, le toit rigide 5 va donc pouvoir basculer entre la position de fermeture au-dessus de l'habitacle 7, tel que montré figs.1,2, et la position d'ouverture de cet habitacle montré fig.7 où le toit 5 (5a, 5b) est escamoté dans le coffre 23 du véhicule (voir également fig.1 avec le toit montré en traits mixtes rangé dans ce coffre).

Au dessus du coffre 23, un capot 25 est monté mobile sur la caisse 3, entre une position d'ouverture et de fermeture de ce coffre.

Ici, le capot 25 est monté basculant vers son bord arrière sur cette caisse 3, entre un état ouvert par basculement vers l'arrière (ARR) et un état fermé par basculement vers l'avant (AVT).

Le basculement vers l'arrière du capot 25 permet au toit de traverser le passage ainsi créé, et donc de sortir du coffre, ou d'y entrer, ici respectivement en se dépliant ou en se pliant. En fin de basculement de ses moyens de déplacement 13a,13b qui l'entrainent dans ces mouvements, le capot 25 se referme.

Conformément à ce qui été indiqué plus haut, le mécanisme de toit précité comprend en outre des butées, repérées dans leur ensemble 27, permettant de limiter le mouvement du toit 5 vers sa position de fermeture (fig.2) par contact entre lesdites butées et certaines zones des éléments 13a,13b de déplacement du toit qui participent donc à sa mobilité.

Figures 1,4 on voit que le bras 17 illustré vient, en fin de mouvement de basculement vers l'avant, reposer - s'appuyer - sur la butée latérale fixe 27a.

Avec l'aide de la fig.8, on constate qu'une butée symétrique 27b reçoit alors favorablement l'autre bras 17 et qu'une est encore disponible.

Selon une caractéristique importante, toutes ou partie de ces butées servent également d'appui à une tablette arrière 29 équipant le véhicule et montrée figs.5-7.

De préférence, cette tablette sera montée mobile par rapport à la caisse 3, pour occuper une première position stable toit fermé et une seconde position stable toit ouvert.

Favorablement, au moins une butée additionnelle sera en outre utilisée pour soutenir cette tablette, ici la butée 27c montrée figs.2-8 disposée, transversalement à l'axe longitudinal X, entre lesdites butées latérales 27a, 27b servant donc déjà d'appui à la tablette 29.

On conseille que ces trois butées 27a,27b,27c forment un triangle d'appui pour la tablette, les deux butées 27a,27b étant latérales, celle 27c étant située en arrière des deux premières. Ici, la butée 27c est centrale (axe X).

Les figs. 5-7 montrent qu'on conseille que les butées précitées servent d'appui à la tablette 29 en particulier toit ouvert.

On conseille par ailleurs que certaines au moins de ces butées, ici celles repérées 27a,27b, soient montées sur les platines respectivement 15a,15b fixées sur la caisse 3.

Figs.2-8, on voit qu'il est favorable que ces platines latérales 15a,15b reçoivent, sur elles, la liaison mobile des moyens déplacement du toit sur la caisse, matérialisés ici par les moyens articulés 17,19.

Ainsi, on pourra pré-assembler sur chaque platine 15a,15b, et y tester, tous les moyens précités montés sur elles et même assembler le toit et les moyens 13a,13b, avant d'assembler le tout, sur chaîne, chez le constructeur automobile concerné.

Comme illustré, les éléments de déplacement du toit venant au contact des butées 27a,27b seront de préférence les bras latéraux d'articulation du toit sur la caisse. Ici, il s'agit des bras moteur 19. Pour cela, on voit figs.2,4 que chaque bras latéral présente un dégagement - voir l'excroissance 31 sur chaque bras 19 - qui s'appuie sur la butée concernée en position de fermeture du toit.

Comme on l'a compris, il est favorable que les butées comprennent au moins deux butées latérales, ici 27a,27b, respectivement proches de zones situées au droit des bords latéraux 50a,50b du toit, ceci par souci d'équilibre, de place disponible et d'ergonomie.

Les butées peuvent être flexibles. Ici, elles sont à effet ressort, montées chacune sur un élément d'appui élastique 30 permettant d'amortir les mouvements du toit (en fin de mouvement de fermeture ou début d'ouverture) et/ou de la tablette.

Via cette solution à ressort de compression 30 ou autre (lames élastiques...), la présence d'éléments à contact élastique entre ces organes va permettre d'appliquer une précontrainte au toit 5 lorsque celui-ci est fermé. Ceci sera en particulier performant si, comme proposé, on fait coopérer les butées latérales précitées à amortissement, ici 27a,27b, et les surfaces rigides d'appui des éléments de déplacement du toit (ici les zones 31).

On conseille que la précontrainte soit d'au moins 20 kilos sur chacune des butées 27a,27b, et de préférence supérieure à 40 kilos par butée.

Par ailleurs et de préférence, la (chaque) butée additionnelle, ici la butée arrière et/ou centrale 27c, sera montée sur un élément transversal 33 monté fixement, latéralement, sur les platines latérales 15a,15b, comme montré figs.7,8. Sa position avancée et la forme du toit font qu'il ne gêne pas lors du rangement du toit.

Equiper un véhicule convertible d'un tel mécanisme de toit doit satisfaire le marché.

Figs.5-7, on peut encore noter que la tablette 29 à laquelle lesdites butées, ici 27a,27b,27c, servent d'appui lorsque le toit 5 est en position d'ouverture est montée mobile sur le couvercle 25 du coffre 23.

Fig.5, on voit que dans cet état ouvert/rangé du toit, la tablette 29 s'étend, et occupe l'espace, entre le bord avant 25a du capot de coffre 25 - alors fermé - et le bord arrière 35a de la structure arrière de l'habitacle 7, tel le bord arrière transversal supérieur des sièges 35.

Elle est alors opérationnelle pour empêcher l'accès au coffre 23 et notamment le protéger contre la pluie. Elle occupe alors une position sensiblement horizontale.

A nouveau figs.5-7, on peut aussi noter que la tablette 29 à laquelle lesdites butées, ici 27a,27b,27c, servent d'appui lorsque le toit 5 est en position d'ouverture est montée mobile sur le couvercle 25 du coffre 23. Des biellettes articulées 37, montées sur cette tablette et sur le capot 25 - ou le support de capot 39 - permettent cela.

En position fermée du toit 5, et pour les mouvements de celui-ci entre ses états fermé et ouvert, la tablette 29 peut être déplacée pour être escamotée afin de dégager l'espace entre les zones 25a et 35a. Montée sur le capot 25, elle peut alors être déplacée sous ce capot et basculer avec lui pendant qu'il s'ouvre ou se ferme.

## Revendications

1. Mécanisme de toit pour un véhicule à toit rigide (5) monté mobile sur la caisse (3) du véhicule entre une position de fermeture au-dessus de l'habitacle (7) de ce véhicule et une position escamotée d'ouverture de cet habitacle, le mécanisme comprenant des butées (27a, 27b) permettant de limiter le mouvement du toit (5) vers sa position de fermeture par contact entre lesdites butées et des éléments de déplacement (13a, 13b) du toit participant à sa mobilité, **caractérisé en ce que** les butées (27c) servent également d'appui à une tablette (29) équipant le véhicule, lorsque le toit (5) est en position d'ouverture, escamoté.

2. Mécanisme de toit selon la revendication 1, **caractérisé en ce que** les butées (27a, 27b) sont montées sur des platines latérales (15a, 15b) montées fixement sur la caisse (3) et recevant des moyens d'articulation (17, 19) du toit (5) sur ladite caisse (3).

3. Mécanisme de toit selon l'une des revendications précédentes, **caractérisé en ce que** les éléments de déplacement (13a, 13b) du toit (5) venant au contact des butées (27a, 27b) sont des bras latéraux (17, 19) d'articulation du toit (5) sur la caisse (3).

4. Mécanisme de toit selon l'une des revendications précédentes, **caractérisé en ce que** les butées (27a, 27b, 27c) comprennent au moins deux butées latérales (27a, 27b) respectivement proches de zones situées au droit des bords latéraux (50a, 50b) du toit (5).

5. Mécanisme de toit selon la revendication 4, **caractérisé en ce qu'**il comprend au moins une butée additionnelle (27c) disposée, transversalement à l'axe longitudinal (X) du toit (5) fermé, entre lesdites butées latérales (27a, 27b) servant d'appui à la tablette (29).

6. Mécanisme de toit selon les revendications 2 et 5, **caractérisé en ce que** ladite au moins une butée additionnelle (27c) est montée sur un élément transversal (33) monté fixement sur les platines latérales (15a, 15b).

7. Mécanisme de toit selon l'une des revendications précédentes, **caractérisé en ce que** tout ou partie des butées (27a, 27b, 27c) comprend des éléments d'appui élastique (30) permettant d'amortir les mouvements du toit (5) et/ou de la tablette (29).

8. Mécanisme de toit selon la revendication 4 ou cette revendication 4 et l'une des revendications 5 à 7, **caractérisé en ce que** les butées latérales (27a, 27b) comprennent des éléments d'appui élastique (30) permettant d'appliquer une précontrainte au toit (5) lorsque le toit (5) est fermé.

9. Mécanisme de toit selon la revendication 8, **caractérisé en ce que** la précontrainte est d'au moins 20 kilogrammes sur chacune des butées (27a, 27b, 27c).

10. Toit (5) rétractable équipé d'un mécanisme selon l'une des revendications précédentes.

11. Véhicule équipé d'un mécanisme selon l'une des revendications 1 à 9 ou d'un toit (5) selon la revendication 10.

12. Véhicule selon la revendication 11, **caractérisé en ce qu'**en position d'ouverture de l'habitacle (7) le toit (5) est escamoté dans un coffre (23) du véhicule, et la tablette (29) à laquelle lesdites butées (27a, 27b, 27c) servent d'appui lorsque le toit (5) est en position d'ouverture est montée mobile sur un couvercle dudit coffre (23).
